# EUROPEAN PATENT APPLICATION

(11) **EP 1 845 571 A2**
(43) Date of publication of application: **17.10.2007**
(21) Application number: 07007472.9
(22) Date of filing: 12.04.2007
(51) Int. Cl.: H01M 4/86, H01M 4/88, H01M 4/92, H01M 8/02, H01M 8/10

(54) **Deposition processes for manufacturing electrochemical cell parts**

(30) Priority: 12.04.2006 US 402473
(71) Applicant: American GFM Corporation, Chesapeake VA 23323 (US)
(72) Inventor: Buckley, Daniel T., Shrewbury, VT 05738 (US)
(74) Representative: Babeluk, Michael

(57) **Abstract**

The present invention relates to the resultant products, the method and apparatus to produce electrochemical cell parts using a material deposition process or processes and specially developed inks appropriate to the specific application requirements at each location on the bipolar plate and can include the gas diffusion layer and the specific deposition of the catalyst and the seals.

## Description

In an exemplary application, electrochemical cells such as fuel cells are currently under development to produce electrical power for a variety of stationary and transportation applications. To produce useful currents and voltages, individual fuel cells can be connected in series to form stacks of cells. Adjacent cells in a stack are typically separated by monopolar or bipolar cell plates, where bipolar plates serve as the anode for one fuel cell and the cathode for the adjacent cell. Thus the bipolar plate typically functions as a current collector as well as a barrier between the oxidizers and fuels on either side of the plate. In addition, many stack designs incorporate gas or liquid flow channels into the cell plate. In fuel cells featuring an electrolyte, such as a catalyzed proton exchange membrane ("PEM") fuel cells, alkaline fuel cells ("AFC"), molten carbonate fuel cells ("MCFC"), solid oxide fuel cells ("SOFC"), direct methanol fuel cells ("DMFC") and regenerative cells these flow channels ideally provide equal distribution of reactant gases or liquids over the entire area of the electrolyte. In fuel cells without a membrane, such as the laminar flow fuel cells disclosed in US Published Patent Application No. 2004/0072047 (incorporated herein by reference), the flow channels provide the equal distribution and the laminar flow of the reactants. Flow channels are commonly molded or machined into both sides of a bipolar plate, with an anode flow channel on one side, a cathode flow channel on the other side, and optional additional channels, usually at the center of the plate, for flowing coolant gases or liquids.

To date, the cell plate remains a problematic and costly component of fuel cells, as well as other electrochemical cells, such as alkaline fuel cells, zinc-air batteries, and the like. The most commonly used material for cell manufacturing is machined graphite, which is expensive and costly to machine. The brittle nature of graphite also prevents the use of thin components for reducing stack size and weight, which is particularly important for transportation applications. Other stack designs consider the use of metal hardware such as stainless steel. But a number of disadvantages are associated with metal, including high density, high cost of machining, and possible corrosion in the fuel cell environment. The corrosion may be prevented by means of chemically resistant coatings, usually at the price of a drop in conductivity. Still other designs use compression molding of specially developed conductive bulk molding compounds (BMC), which can be relatively brittle and expensive and require long process cycle times. Such processes also usually require high capital cost for machinery and tooling.

Additionally, in fuel cells with a membrane, such as PEM and DMFC-type fuel cells, the cost and efficiency of the cell is also a function of the cost and efficiency of the membrane that can carry catalysts on the surface (such catalysts usually comprise costly metals, typically platinum in PEM fuel cells and platinum-ruthenium in DMFC fuel cells), compounded by the cost and efficiency of the diffusion layer (usually carbon fiber) that can also carry catalysts. The cost of sealing systems in the cell stacks is also a factor affecting the overall cost of electrochemical cells. The sealing systems can comprise several types of seals, from "O" rings to molded to shape seals, and are generally produced separately and installed during the assembly of the cell. Such sealing systems can be both costly and cumbersome during the assembly of the stack of cells.

### SUMMARY

In a first set of representative embodiments, the present invention teaches a method for producing electrochemical cell parts, comprising the steps of: (a) applying one or more layers of a material on a substrate or a carrier surface; and (b) optionally removing the carrier surface; wherein the step of applying one or more layers is accomplished by applying ink in a material deposition printing process, optionally changing the composition of the ink in one or more layers.

In a second set of representative embodiments, the present invention teaches a method for manufacturing electrochemical cell parts comprising applying a catalyst to a surface, wherein said applying the catalyst to the surface is accomplished in a material deposition printing process.

In a third set of representative embodiments, the present invention teaches a method for forming a catalyst layer, comprising: (a) producing ions of a first catalytic material; (b) implanting the ions produced in step (a) in a conductive material; wherein (i) the first catalytic material is a metal, and (ii) the second material is a carbon-based material.

In a fourth set of representative embodiments, the present invention teaches a catalytic material comprising a carbon-based material and a metal, wherein the carbon-based material is one or more of carbon fibers, graphite and xGnP.

In a fifth set of representative embodiments, the present invention teaches an apparatus for producing electrochemical cell parts, comprising: (a) an application device for applying one or more layers of a material on a substrate or a carrier surface; and (b) optionally a device for removing the carrier surface; wherein the device for applying one or more layers applies ink in a material deposition printing process, optionally changing the composition of the ink in one or more layers.

In a sixth set of representative embodiments, the present invention teaches an apparatus for manufacturing a catalyst, comprising: (a) means for producing ions of a first material;(b) means for implanting the ions produced in step (a) in a conductive material; wherein (i) the first material is a metal, and (ii) the second material is a carbon-based material.

In a seventh set of representative embodiments, the present invention teaches a method for manufacturing a catalyst comprising: (a) producing ions of a first catalytic material; (b) contacting the ions produced in step (a) with a conductive material; wherein the second material is a carbon-based material.

In an eighth set of representative embodiments, the present invention teaches a method for manufacturing a catalyst comprising: (a) producing ions of a first catalytic material; and (b) contacting the ions produced in step (a) with a conductive material; wherein the second material is a carbon-based material.

In a ninth set of representative embodiments, the present invention teaches a method for manufacturing electrochemical cell parts comprising: (a) forming nanoparticles of a first material; (b) accelerating said nanoparticles toward a second material to hypersonic velocities; and (c) impacting said target second material with said accelerated nanoparticles.

In a tenth set of representative embodiments, the present invention teaches a method for manufacturing electrochemical cell parts, comprising: (a) generating an aerosol cloud of particles, said particles comprising a first material; (b) accelerating said particles through a nozzle; (c) generating a collimated beam of particles by passing said particles through a plurality of aerodynamic focusing lenses; and (d) impacting said collimated beam of particles against a second material.

In an eleventh set of representative embodiments, the present invention teaches a method for manufacturing a catalytic ink comprising: (a) producing ions of a first material; (b) contacting the ions produced in step (a) with a conductive material; and (c) contacting the product of step (b) with a carrier fluid.

In a twelfth set of representative embodiments, the present invention teaches an apparatus for producing electrochemical cell parts, comprising: (a) an application device for applying one or more layers of a material on a substrate or a carrier surface; and (b) optionally a device for removing the carrier surface; wherein the device for applying one or more layers applies ink in a material deposition printing process, optionally changing the composition of the ink in one or more layers.

These and other embodiments of the present invention are set forth herein.

### BRIEF DESCRIPTION OF THE DRAWINGS

The skilled artisan will understand that the drawings, described below, are for illustration purposes only. The drawings are not intended to limit the scope of the invention in any way.
FIGURE 1 illustrates fuel cell parts manufactured according to the methods of the present invention.
FIGURE 2 illustrates the deposition of conductive materials to form electrochemical cell parts.
FIGURE 3 illustrates the deposition of gasket material to form gaskets.
FIGURE 4 illustrates fuel cell parts manufactured according to the present invention.
FIGURE 5 illustrates fuel cell parts formed by the use of lost core materials.
FIGURE 6 illustrates fuel cell parts formed by depositing materials on a substrate and a conductor.
FIGURE 7 illustrates fuel cell parts formed by depositing cooling channels within each layer.
FIGURE 8 illustrates fuel cell parts manufactured without bipolar plates or structures equivalent thereto.
FIGURE 9 illustrates a catalytic material incorporated in a carbon based material.

### DESCRIPTION OF VARIOUS EMBODIMENTS

The present teachings provides new methods, apparatuses and materials to make parts of electrochemical cells, wherein all of the design features are created by depositing materials on a substrate per the design requirements of the desired electrochemical cell. The materials are applied by material deposition technologies such as those employed in the high-speed and specialty printing industries, e.g. ink jet, laser printing, dispersion printing or lithographic printing. For instance, material deposition apparatuses such as those used in the semiconductor industry can be employed. Example apparatuses include printers of the DMP-2800 (DIMATIX, Santa Clara, CA) series, a family of ink jet printing systems capable of depositing materials on a variety of rigid and flexible substrates such as plastic, metal and paper with printing feature sizes or line widths as small as 50 µm.

The deposition of materials can also be carried out via ultra-small orifice deposition apparatuses, especially with inks characterized by a higher viscosity than is advisable to be used in ink jet-type deposition heads. This technique allows for the use of application tips with a diameter in the micron scale, and is also presently used in the semiconductor industry.

The materials can also be deposited via processes based on the rapid expansion of supercritical fluid solutions through a small orifice, also referred to as RESS expansion. This technique involves the rapid expansion of an ink comprising a pressurized supercritical fluid solution of a solute material to be deposited in a low pressure region, allowing the formation of powders and deposition of surface layers, as disclosed in US Pats. Nos. 4,582,731; 4,734,227 and 4,734,451 (incorporated herein by reference). The solute particles that form upon the discharging of the supercritical fluid solution can also be charged to a first electric potential and deposited on a surface that is charged to a second potential or at electric ground, as in the techniques disclosed in US Pat. No. 6,756,084 (incorporated herein by reference).

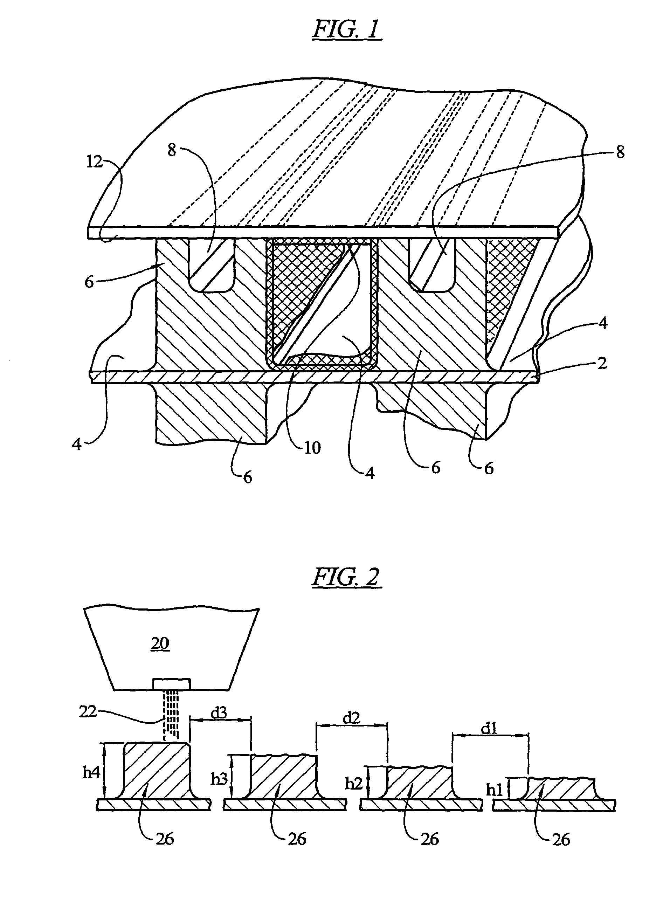

Buildups of desired materials are deposited in desired locations and configurations for the manufacture of flow paths, conductor parts, protective coatings, seals and various elements of a monopolar plate or a bipolar plate. As illustrated in the example PEM cell of Fig. 1, the printing can occur on one or both sides of the substrate 2. The resulting structure can comprise flow channels 4, flow field separators 6 and cooling channels 8. The cooling channels can be configured to provide water to the PEM and keep it wet while keeping the water from the flow fields. Also, the GDL and the catalyst, herein represented as layer 10 can be deposited on the PEM 12 and along the surface of flow channels 4. When the material deposition takes places on both sides of the substrate, it can be carried simultaneously on both sides or sequentially, first on one side and then on the other.

The desired materials can comprise the appropriate combinations of resins, conductive fillers, fillers, initiators, diluents and catalysts, and are deposited via the printing process to build the necessary shapes of the part and selectively print conductive materials, sealing materials, catalysts and gas or liquid diffusion materials, and are referred to herein as inks. The "inks" can cure by a variety of mechanisms, such as thermal curing or electromagnetic energy-driven curing by electromagnetic energy of various types such as visible light, ultraviolet light, infrared light, microwave energy and laser light. The curing may also be via anaerobic curing, solvent flash and solvent evaporation. When the inks are cured by the application of electromagnetic energy, said energy can be applied by means of, for example, electromagnetic energy sources such as incandescent light producing devices, e.g. light bulbs, electroluminescent devices such as light emitting diodes or light producing polymers, and laser light sources.

If two or more different materials are to be included in the plate, the materials can be deposited via two or more different inks that are applied to the substrate by printing processes similar to that of color printing.

For example, in order to manufacture the conductive parts of a plate, inks comprising one or more electrically conductive components can be used. Such conductive components can be, for example, elemental carbon, graphite, expanded graphite such as the exfoliated graphite or exfoliated graphite nanoplatelets (" xGnP ") disclosed in US Published Patent Application No. 2004/0127621 (incorporated herein by reference), metals, boron carbide, titanium nitride, conductive polymers and fullerenes such as C₆₀, C₇₀, C₇₆, C₈₄, C₈₆, C₉₆, fullerites, fullerides, endohedral fullerenes, exohedral fullerenes, heterofullerenes, metallocarbohedrenes and nanotubes.

As illustrated in Fig. 2, the conductive materials can be deposited to form, for instance, the conductive separators that divide the flow channels. Material deposition head 20, for example a deposition head of a DMP-2800 apparatus, deposits conductive ink 22 on substrate 24. The progressive buildup of the material is illustrated, for instance, by the height of the conductive separators increasing from h₁ to h₄. The ink can be cured according to any of the methods set forth above, yielding conductive separators 26. The spacing of the separators can vary, for example from d₁ to d₃, yielding flow channels of the desired widths.

In order to manufacture the sealing parts of the cell, inks comprising one or more sealing materials, for example elastomeric materials such as urethanes, organic elastomers and silicones, can be used. If any part of the seal requires protection from chemical degradation, for instance parts of the seal that are in contact with the oxidants or fuels used in the electrochemical cell, the composition of the sealant can be made to comprise chemically resistant materials in such parts. Alternatively, layers of chemically resistant materials may be added to such parts. To improve chemical resistance, materials such as graphite nanoplatelets, graphite microplatelets or other carbon constructs of the nano scale or larger can be added to the sealing material as needed. The deposition and formation of the seals can be such that the shape of the seals, sealing materials and location of the seals meet the requirements of the application at hand. Also, the sealing materials may be changed during deposition to further meet the application demands. The methods of the invention allow for the deposition of the sealing materials a thin layer at a time. Each such layer can be cured prior to the deposition of the following layer, or its effective viscosity can be modified by heating, molecular weight increase or diluent loss. Accordingly, seals with specific geometries can be formed, for instance seals with torturous paths, undercuts and locks.

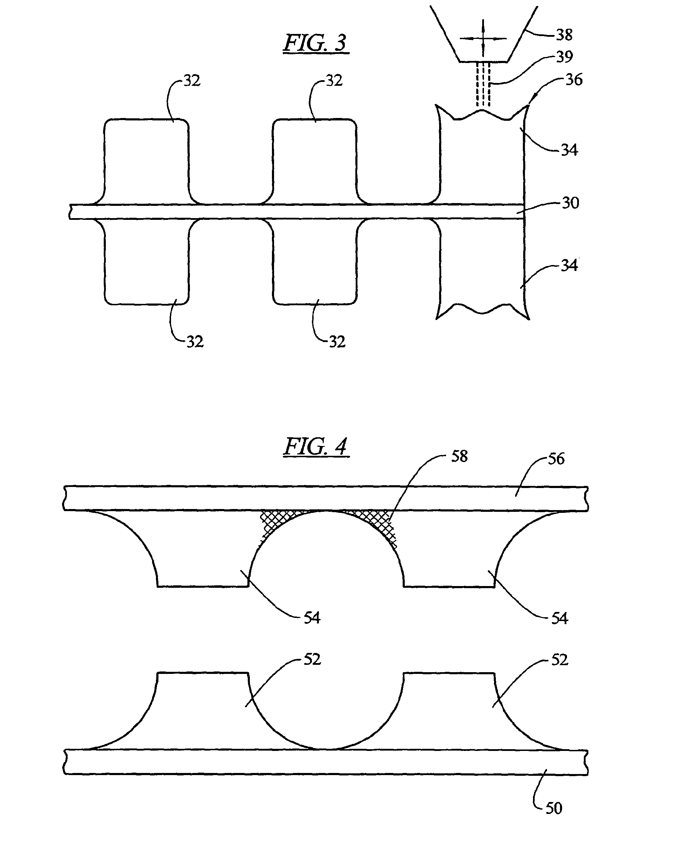

For instance, as illustrated in Fig. 3, gaskets 34 are formed by the deposition of gasket material 39 by means of deposition head 38 along the outer rim of substrate 30, thus sealing the substrate and conductors 32. Gasket material 39 can be for example an elastomeric material, and specific gasket geometries can be attained, for example lip seal geometry 36.

The substrate can comprise a conductive material, for instance a metal sheet. In principle, any electrically conductive material can be employed, such as graphite paper as in xGnP paper, stainless steel, aluminum, zinc, magnesium, copper or multimetal sheets, for example crude or pretreated, e.g. roughened and/or anodized, aluminum sheets, aluminum foils, polymer films with metallized surfaces, such as polyethylene terephthalate films coated with aluminum by vapor deposition, and electrically conductive papers. Layers of protective coating can also be applied to metal substrates in order to prevent corrosion and the poisoning of catalysts by its by-products.

In applications such as low power applications, the substrate can be non-conductive if the in-plane conductivity of the flow dividers is sufficient to carry the load, which can be the case in some low power applications such as hand held devices. To this end, the in-plane conductivity of cell parts such as the flow dividers can be increased by incorporating into the materials components such as conductive spheres, conductive plates and conductive fibers.

The substrate or other parts of the cell can also comprise superconductive materials, such as superconducting ceramics, cuprates and superconductive wires such as the MgCNi₃-based wires disclosed in Physical Review B, Vol. 70, 064508, 2004 (incorporated herein by reference).

If the substrate is porous, as in the case of some electrically conductive papers, the applied inks can provide a sealing and protective coating of the substrate in order to remedy its porosity. Where required, such a sealing and protecting coating can be selectively applied in order to maintain and not compromise the conductivity of the cell, while simultaneously or sequentially manufacturing the conductive parts of the plate such as the flow channels.

The methods of the present invention allow the manufacture of flow paths for oxidizers, fuels and coolants that can be continuous like a ribbon and can be rolled up into a round tubular shape or other shapes of cell flow paths. If the substrate is flexible, as in the case of paper, the oxidizer flow paths and/or fuel flow paths and coolant flow paths can be deposited on the same substrate; the non-deposited upon side of the substrate can then be folded onto itself, thus creating a structure with oxidizer and/or fuel flow paths on one side and coolant flow paths on the other side.

Alternatively, one or more cell parts can be manufactured without a substrate. In this embodiment of the invention, the parts are deposited into or onto a carrier surface that releases and is removed for further use or to be disposed, thus eliminating the need for the substrate. The carrier surface can be made for example of thermoplastic polymers that would provide the release characteristics and the surface requirements, where a cell part, e.g. the entire structure of a cell plate is deposited so that a substrate is not necessary. In one exemplary embodiment, one such carrier surface is a film made of ultra high molecular weight polyethylene PE. A cell plate is deposited on the film and when completed, the film is separated, cleaned (if necessary) and sent back through the printing process for another cycle.

A carrier surface can also be "shaped" such that an imprinted pattern can be filled during the process to form one side of the plate while the process will then build the rest of the plate on the filled pattern. In addition, both sides of a cell plate can be deposited on one side of a carrier surface, and the surface is then folded unto itself to yield the desired cell plate. In addition, the deposition of the flow channels can be completed, during the deposition of the GDL, by depositing one or more layers comprising fibers of a length sufficient to bridge the gap between the sides of the flow channel, effectively closing the flow channel while depositing the GDL.

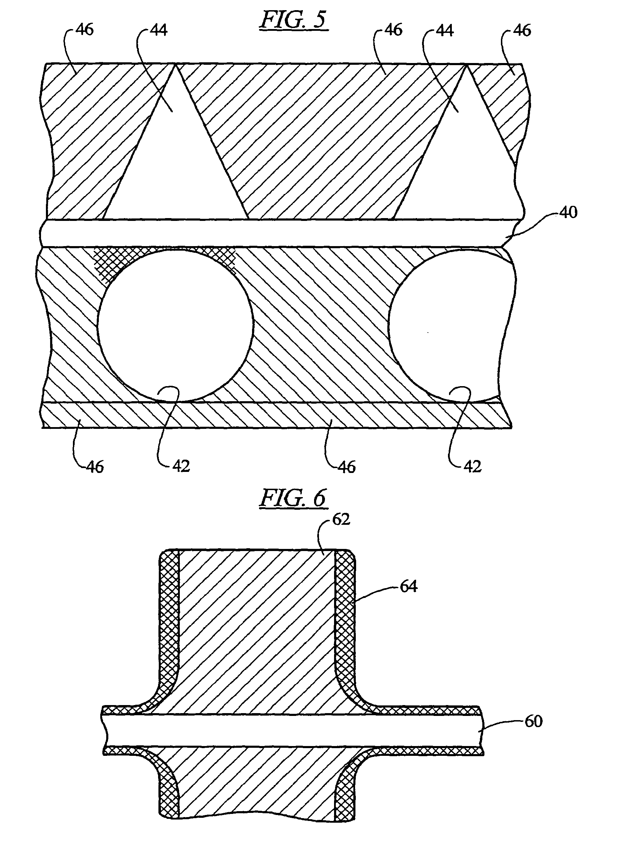

The example of Fig. 4 illustrates a flow channel manufactured according to a "split flow channels" method. A lower part is created by deposition of structures 52 on conductive substrate 50, and an upper part by deposition of structures 54 on the PEM 56, with the catalyst and GDL 58 being part of the deposition on the PEM. The flow channel is then completed by stacking the parts so obtained.

There are several advantages to the split flow channel method. First, the catalyst and GDL can be deposited directly on the PEM in the same pathway as the flow field thereby optimizing the amount of GDL and catalyst used while at the same time the flow channel separators are being deposited. A simple and effective way is thus provided for putting the GDL and the flow channel separators in contact with the PEM. If desired, additional channels, for example channels for coolants such as water, can be included in the fuel cell. Also, crossovers and other design iteration can be applied to assist the optimization of the flow of fuels, oxidizers and coolant in order to achieve maximum efficiency.

As set forth above, one part of the flow channel can be deposited directly on a conductive substrate. In cell with a membrane, such as PEM cells, this allows the flow channel to be shaped such that the area furthest away from the PEM can be larger than the area closest to the PEM, a factor that can aid in the improvement of flow efficiency and reduction of flooding. This also allows the flow channels to be variable in cross section to control the velocity of the flow without sacrificing the contact area at the GDL and PEM.

In laminar flow cells, the split flow channel method allows for the deposition of variable geometry channels that maintain the laminarity of flow as the fluids transporting the oxidant and the fuel change in chemical composition and/or other physico-chemical attributes, such as temperature, due to the occurring of the oxido-reductive processes of the cell. Also, the shape of the flow channel can be varied in order to maximize flow and current output efficiency.

Additionally, the split flow channel method allows for the manufacturing of electrochemical cells that are less sensitive to bending, because the reduced height of each or both parts of the flow channels will reduce the radial change during the bending of the barrier that can occur when rolling or contouring the electrochemical cell. For example, when either side is deposited, interruptions in the vertical direction can be provided such that during bending the radial difference is accommodated and the split are closed to provide a solid flow barrier.

The manufacturing of channels and other hollow parts of the cell or parts thereof can be carried out with the use of "lost core" types of materials. Such materials can be removed by, for instance, melting out, dissolution or sublimation, yielding hollow features of the desired structure. Example lost core material may be frozen liquids, such as ice, materials that sublime upon heating such as dry ice, materials that melt upon heating such as wax or gels and/or materials that liquefy by means of chemical reactions occurring therein, such as polysaccharide mixtures containing hydrolytic enzymes such as amylases.

In an example embodiment of the use of lost core materials, as illustrated in Fig. 5, one such material, for instance wax, is deposited in the space where gas flow channels 42 are intended to be. The material closing up the channel, for example a conductor and/or a gas diffusion layer (GDL) 46 is then deposited over the wax. Melting or dissolving of the wax follows, yielding the desired channel. The same technique can be applied for manufacturing channels with differing cross-sections according to the application at hand. For instance, on the opposite side of the PEM 40 with respect to channels 42, a second set of channels 44 with a triangular cross-section can be manufactured, if such a cross-section is desired.

The present teachings also provide new methods for the inclusion of catalysts in fuel cells. Since the oxidizers and the fuels of the fuel cell will only be exposed to the catalyst in the open area of the flow path, the catalyst can be deposited in the desired quantities on the surfaces of such path. In a PEM fuel cell, for instance, the catalyst can be deposited on the surface of the membrane in the flow path. The catalyst path will therefore match the flow path, and there will be no catalyst in other areas that may be unused and wasted. Similarly, the catalyst can also be selectively deposited on the gas diffusion layer (GDL) material in a pattern consistent with matching the flow path. The GDL can also be manufactured by the printing process and the surface of the flow channels can be structured to be part of the GDL.

The methods of the inventions also allow for the deposition catalyst and the GDL on locations other than the surface of the PEM. As illustrated in Fig. 6, layer 64, which may comprise a catalyst layer, a GDL, or both, is yielded by depositing the appropriate materials on substrate 60 and conductor 62. Accordingly, increases in battery efficiency and a lowering of sensitivity to flooding can be accomplished by depositing the catalyst layer, a GDL, or both, over the surface of a flow channel.

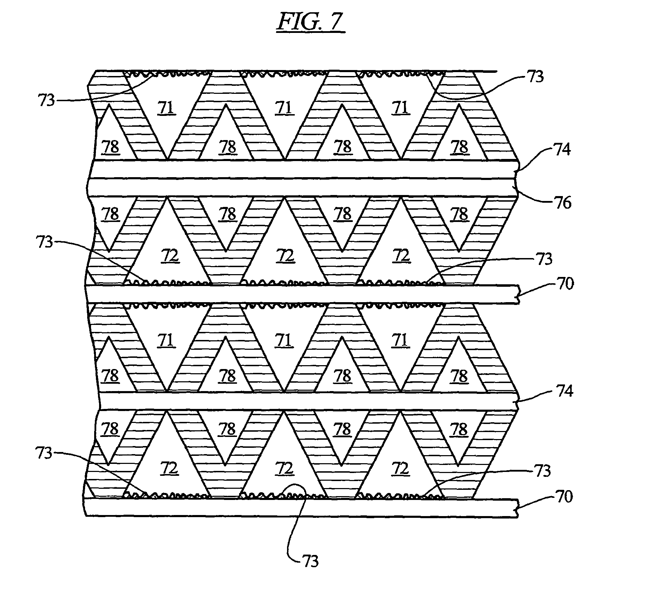

The methods of the invention also allow for the deposition of cooling channels within each layer, as illustrated for example in the fuel cell of Fig. 7. Here, coolant channels 78 are integral within every layer, thus saving space while increasing the efficiency of heat removal from other cell parts such as fuel flow channels 71 (wherein the fuel can be for example hydrogen gas), PEM's 70, oxidant channels 72 (wherein the oxidant can be for example a mixture of air and water), catalysts/GDL's 73, conductor layers 74 and optional heat-conducing layer 76.

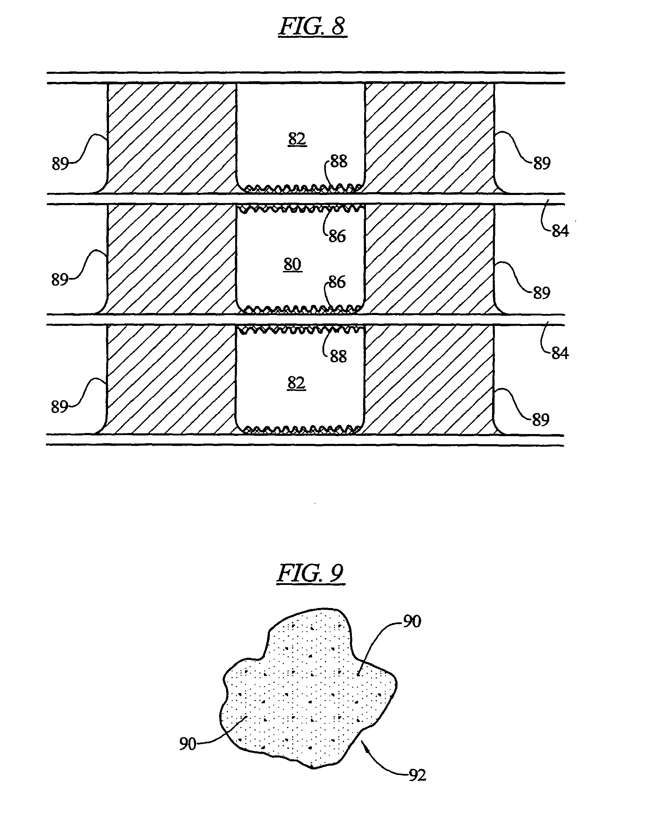

The present invention also provides methods for manufacturing fuel cells without bipolar plates. As illustrated in the example of Fig. 8, this may be accomplished by depositing oxidant flow channels 82 on either side of fuel flow channel 80, with PEM's 86 separating the flow channels and catalyst/GDL layers 86 catalyzing the reactions occurring at the cathodes and catalyst/GDL layers 88 catalyzing the reactions occurring at the anodes. As the catalyst/GDL layers are operably connected to the dividers 89, the electrons produced at the cathodes are conducted through the dividers themselves, or conductive parts thereof, thereby reaching the anodes. As this type of structure does not include bipolar plates, the anodes and the cathodes of the electrochemical cell can be manufactured with different materials in order to accommodate different environments. The alternating structure can be repeated as many times as necessary to create the stack and the power desired.

The catalysts can be any catalysts that can be used in PEM and DMFC-type cells, for instance platinum or platinum-ruthenium catalysts. Other catalysts can be used, for instance nanoparticles of nickel, copper, silver and other metals, metal oxides such as cobalt nickel oxides and metal chelates such as chelated cobalt cyclic-porphyrins. One such catalyst is QSI-NANO^{™} (Quantumsphere, Costa Mesa, CA). The catalyst can be attached to a surface with a polymer binder. Should such a binder prove unsuitable, a two-step deposition and thermal seating approach can be applied. In this approach, the catalyst is deposited on the desired surface, for instance a PEM, held in place electrostatically and thermally seated via a hot roller or other technique that will not damage the PEM.

The catalyst can also be a catalytic material incorporated in a conductive material, wherein said catalytic material is suitable for fuel cells such as PEM and DMFC cells, and said conductive material can be for instance a carbon-based material such as elemental carbon, carbon fibers, graphite and xGnP. Such catalysts can be prepared by introducing ions of a catalytic material into a conductive materials by ion implantation techniques of the type commonly used in semiconductor device fabrication and in metal finishing. Accordingly, as illustrated in the example of Fig. 9, catalytic material such as metal 90 is incorporated in carbon-based material 92.

Accordingly, the catalytic material thereby incorporated on the surface of the conductive material is in intimate connection with the conductive material itself, yielding a catalytic material with a high surface to catalyst weight ratio. For example, a catalytic material can be implanted in carbon fibers, graphite or xGnP, and the resulting material can be suspended in a carrier fluid, such as a solvent or a supercritical fluid, to prepare "catalyst inks". Such inks can be deposited wherever desired on active surfaces in the flow paths of the oxidizer and the fuel.

Electrochemical cells can also be manufactured with materials produced by means of hypersonic plasma particle deposition, as disclosed in US Pat. No. 5,874,134 (incorporated herein by reference). In such embodiments of the invention, nanoparticles of a first material, are produced by gas-phase nucleation and growth in a high temperature reactor such as a thermal plasma expansion reactor, followed by hypersonic impaction of the particles onto a temperature controlled substrate of a second material. When the first material is a catalytic material, hypersonic impaction can be used for consolidation of catalytic particles onto and/or into a conductor second material. Also, novel materials with the desired catalytic and/or conduction properties can be obtained through chemical reactions activated at high impaction velocities.

Focused particle beam deposition, a technology disclosed US Pats. Nos. 6,924,004 (incorporated herein by reference), can also be used for the manufacture of electrochemical cells. In such embodiments of the invention, gas-borne particles of a first material are generated, for instance by means of a thermal plasma expansion reactor. The particles are confined in a narrow, high-speed particle beam by passing the aerosol flow through an aerodynamic focusing stage, followed by high-speed impaction of the tightly focused particles onto a substrate of a second material in a vacuum deposition chamber. When the first material is a catalytic material, focused particle beam deposition can be used for consolidation of catalytic particles onto and/or into a conductor second material. Also, novel materials with the desired catalytic and/or conduction properties can be obtained through chemical reactions activated at high impaction velocities.

Although I have described my invention by reference to particular illustrative embodiments thereof, many changes and modifications of the invention may become apparent to those skilled in the art without departing from the spirit and scope of the invention. I therefore intend to include within the patent warranted hereon all such changes and modifications as may reasonably and properly be included within the scope of my contribution to the art.

## Claims

**1.** A method for producing electrochemical cell parts, comprising the steps of:
(a) applying one or more layers of a material on a substrate or a carrier surface;
and
(b) optionally removing the carrier surface; wherein
the step of applying one or more layers is accomplished by applying ink, nanoparticles, aerosol particles or a catalyst in a material deposition printing process, optionally changing the composition of the ink, nanoparticles, aerosol particles or a catalyst in one or more layers.

**2.** The method of claim 1, wherein the material deposition printing process comprises ink jet printing, laser printing, dispersion printing, lithographic printing, ultra-small orifice deposition, RESS expansion or electrostatic deposition of particles generated from RESS expansion.

**3.** The method of claim 1, wherein the substrate comprises one or more conductive materials.

**4.** The method of claim 3, wherein the conductive materials are selected from metal, elemental carbon, graphite, expanded graphite, boron carbide, titanium nitride, conductive polymers, fullerenes, fullerites, fullerides, endohedral fullerenes, exohedral fullerenes, heterofullerenes, metallocarbohedrenes, nanotubes, metal-coated polymers, electrically conductive papers or a mixture thereof.

**5.** The method of one of claims 1 to 4, wherein one or more layers comprise one or more sealing materials.

**6.** The method of claim 5, wherein the sealing materials are selected from elastomeric materials, organic elastomeric materials, silicon materials or a mixture thereof.

**7.** The method of one of claims 1 to 6, wherein the printing process comprises depositing a layer of an ink, and curing the ink.

**8.** The method of claim 7, wherein the curing of the ink comprises exposing the ink to electromagnetic radiation or heat.

**9.** The method of claim 8, wherein the curing of the ink is accomplished by anaerobic curing, solvent flash or solvent evaporation.

**10.** The method of one of claims 1 to 9, wherein the carrier surface comprises one or more elastomeric polymers.

**11.** The method of one of claims 1 to 10, wherein one or more layers comprise one or more lost core materials.

**12.** The method of claim 11, wherein the core materials are selected from ice, dry ice, wax, mixtures comprising polysaccharides and enzymes, or a mixture thereof.

**13.** The method of one of claims 1 to 12, further including a step of preparing an electrochemical cell from the electrochemical cell parts.

**14.** The method of claim 13, wherein the electrochemical cell is a fuel cell, a fuel cell comprising a PEM, a DMFC or a laminar flow fuel cell.

**20.** The method of one of claims 1 to 19, wherein the substrate is the surface of an electrochemical cell plate, the surface of a flow channel of a fuel cell, the surface of a PEM or the surface of a GDL.

**21.** The method of one of claims 1 to 20, wherein the catalyst is selected from platinum, ruthenium, nickel, copper, silver, cobalt, metal oxides, metal chelates or a mixture thereof.

**22.** The method of one of claims 1 to 21, wherein the catalyst is a conducting material comprising a carbon material component and a metal catalytic material, wherein the conducting material component comprises one or more of carbon, carbon fibers, graphite and xGnP.

**23.** The method of one of claims 1 to 22, further comprising the steps of:
(c) applying one or more layers of a material on a substrate second carrier surface; and
(d) stacking the product of step (a) and the product of step (c), wherein:
the steps (a) and (c) of applying one or more layers are accomplished by applying ink in a material deposition printing process, optionally changing the composition of the ink in one or more layers.

**24.** The method of claim 23, wherein the first substrate carrier surface is a conductive substrate and the second substrate carrier surface is a PEM.

**25.** A method of one of claims 1 to 24, comprising:
(a) forming nanoparticles of a first material;
(b) accelerating said nanoparticles toward a second material to hypersonic velocities; and
(c) impacting said target second material with said accelerated nanoparticles.

**26.** The method of claim 25, wherein the first material is a catalytic material and the second material is a conductive material.

**27.** A method of one of claims 1 to 24, comprising
(a) generating an aerosol cloud of particles, said particles comprising a first material;
(b) accelerating said particles through a nozzle;
(c) generating a collimated beam of particles by passing said particles through a plurality of aerodynamic focusing lenses; and
(d) impacting said collimated beam of particles against a second material.

**28.** The method of claim 27, wherein said first material is a catalytic material, and said second material is a conductor material.

**29.** A method of claim 27, in which the catalytic material is produced by the following steps:
(a) producing ions of a first catalytic material; and
(b) contacting the ions produced in step (a) with a conductive material; wherein the second material is a carbon-based material.

**30.** A method of claim 27, in which the catalytic ink is produced by the following steps:
(a) producing ions of a first material;
(b) contacting the ions produced in step (a) with a conductive material; and
(c) contacting the product of step (b) with a carrier fluid.

**31.** A method for manufacturing an electrochemical cell, comprising the step of applying one or more layers of a material on an ion exchange membrane, wherein the step of applying one or more layers is accomplished by a method of one of claims 1 to 30.

**32.** The method of claim 31, wherein said ion exchange membrane is a PEM.

**33.** An electrochemical cell in which the electrochemical cell parts are manufactured by the application of a plurality of layers of one or more materials on a surface or substrate.

**34.** An electrochemical cell obtainable by a method of claim 33.

**35.** An electric or electronic device powered by the electrochemical cell of claim 333 or 34.

**36.** A catalyst comprising a carbon-based material and a catalytic material, wherein the carbon-based material is one or more of carbon fibers, graphite and xGnP.

**37.** The catalyst of claim 35, and further including a fluid carrier and optionally a binder to form an ink.

**38.** An apparatus for producing electrochemical cell parts, comprising:
(a) an application device for applying one or more layers of a material on a substrate or a carrier surface; and
(b) optionally a device for removing the carrier surface; wherein
the device for applying one or more layers applies ink in a material deposition printing process, optionally changing the composition of the ink in one or more layers.
